# FASCICULE DE BREVET EUROPEEN

(11) **EP 3 347 625 B1**
(45) Date de publication et mention de la délivrance du brevet: **02.09.2020**
(21) Numéro de dépôt: 16775774.9
(22) Date de dépôt: 05.09.2016
(51) Int. Cl.: F16H 61/32, F16H 61/00, F16H 61/28, F16H 63/30

(54) **PROCÉDÉ D'APPRENTISSAGE DE LA POSITION NEUTRE D'UN ACTIONNEUR DE PASSAGE DE VITESSES**
VERFAHREN ZUM LERNEN DER NEUTRALEN POSITION EINES GANGWAHLAKTUATORS
METHOD FOR LEARNING THE NEUTRAL POSITION OF A GEAR SHIFT ACTUATOR

(30) Priorité: 10.09.2015 FR 1558446
(43) Date de publication de la demande: 18.07.2018
(73) Titulaire: Renault S.A.S., 92100 Boulogne-Billancourt (FR); Nissan Motor Company, Limited, Kanagawa-ku Yokohama-shi Kanagawa 221-0023 (JP)
(72) Inventeur: MERIENNE, Ludovic, 91190 Gif Sur Yvette (FR); KETFI-CHERIF, Ahmed, 78990 Elancourt (FR)
(74) Mandataire: Rougemont, Bernard
(86) Numéro de dépôt international: PCT/FR2016/052188
(87) Numéro de publication internationale: WO 2017/042460

(56) Documents cités:
- EP-A1- 2 249 065
- DE-A1-102011 076 388
- US-A- 4 449 416
- US-A- 4 498 350

## Description

La présente invention se rapporte à la commande d'un actionneur de passage de vitesses, pour boîte de vitesses robotisée.

Plus précisément, elle a pour objet un procédé d'apprentissage de la position neutre d'un actionneur de passage de vitesses à baladeur motorisé entre deux pignons d'engagement opposés, comportant un élément de commande régulé en position par son moteur d'entraînement, qui agit sur un ensemble mécanique de déplacement du baladeur muni d'un système d'assistance à ressort apte à accumuler dans un premier temps de l'énergie lorsque les dents du baladeur viennent en butée contre celles du pignon à craboter pour passer la vitesse, et à restituer cette énergie par détente dans un deuxième temps, pour assister l'engagement des dents du baladeur entre celles de ce pignon.

Certains groupes motopropulseurs (GMP) thermiques ou hybrides disposent de boîtes de vitesses à clabots, dont l'engagement des rapports est assuré par des coupleurs à dents plates, ou clabots, sans synchroniseurs mécaniques. Ces boîtes sont généralement « robotisées », c'est-à-dire que leur fonctionnement est celui d'une boite manuelle, mais que les passages de vitesses sont automatisés.

Par la publication FR 3 012 861, on connaît un actionneur de passage de vitesses antichoc pour boîte à clabots à baladeur motorisé, et son procédé de régulation. L'actionneur comporte un élément de commande (ou doigt d'actionnement) motorisé, un système d'assistance mécanique à ressort apte à accumuler dans un premier temps de l'énergie lorsque les dents (ou clabots) d'un baladeur viennent en butée contre celles du pignon à craboter pour passer la vitesse, et à restituer cette énergie par détente dans un deuxième temps, pour assister l'engagement des dents. Le principe de l'assistance consiste à comprimer un ressort qui emmagasine l'énergie fournie par l'actionneur lorsque les dents du baladeur et du pignon sont en butée, et à libérer cette énergie lorsque le clabotage est possible, par accélération de la fourchette. L'accélération obtenue dépend de la compression du ressort, et donc du couple transmis par le moteur électrique pendant l'étape où les dents sont en butée. La régulation proposée repose sur la détection de la mise en butée du baladeur contre le pignon de manière à limiter le couple appliqué sur l'élément de commande.

Une étape importante après le montage de l'actionneur de passage, consiste à apprendre la position du neutre mécanique, c'est-à-dire la position de repos centrale du baladeur entre les deux pignons, lorsqu'aucun rapport n'est engagé. L'objectif de cet apprentissage est que l'actionneur puisse recevoir en fonctionnement la bonne consigne de position pour centrer le neutre. En raison des nombreux jeux de montage, la position du neutre peut être très variable d'une pièce à l'autre. On ne peut donc pas s'assurer que le neutre soit effectivement sur la consigne retenue sans apprentissage préalable de la position neutre. Les publications EP2249065 et DE102011076388 constituent aussi l'art antérieure concernant l'apprentissage du neutre.

Sachant que le moteur d'actionnement dispose d'une régulation en position, qui permet de contrôler les mouvements de l'élément de commande, l'invention prévoit d'identifier les positions caractéristiques de l'élément de commande de l'actionneur à partir de ses mesures de position, et du courant circulant dans le moteur d'actionnement.

Elle propose à cet effet, de déterminer la position neutre de l'actionneur en identifiant les positions de l'élément de commande lors de la mise en butée des dents du baladeur contre celles de chacun des deux pignons, par observation du couple résistant sur l'élément de commande au cours du déplacement du baladeur vers les pignons. Selon l'invention, la méthode comporte une première étape de calcul de la distance entre les positions de butées en détectant les positions de l'élément de commande, lorsque la valeur du couple résistant estimé sur celui-ci, franchit un seuil traduisant la mise en butée du baladeur qui est réitérée si les dents du baladeur s'engagent directement entre celles d'un pignon en fin de course.

Cette première étape peut être suivie d'une deuxième étape de mesure plus fine des positions de butée du baladeur, consistant à placer l'élément de commande dans une position de butée identifiée, puis à le libérer en coupant le moteur d'actionnement, pour s'assurer qu'il conserve cette position.

La méthode proposée utilise des techniques d'observation, afin d'estimer un effort résistant sur l'élément de commande, pour identifier la compression du ressort. Elle inclut un enchaînement d'actions permettant d'aboutir à une estimation très précise des positions de butée.

D'autres caractéristiques et avantages de l'invention ressortiront clairement à la lecture de la description suivante d'un mode de réalisation non limitatif de celle-ci, en se reportant aux dessins annexés, sur lesquels :
- la figure 1 est un schéma de principe de l'actionneur concerné,
- la figure 2 résume la première étape du procédé,
- la figure 3 est un algorithme d'estimation du couple résistant,
- la figure 4 illustre une première étape du procédé, avec blocage des dents du baladeur sur celles du pignon,
- la figure 5 illustre une deuxième étape du procédé, sans blocage des dents du baladeur sur celles du pignon,
- la figure 6 illustre une deuxième étape du procédé, et
- la figure 7 illustre un cas de mise en échec de celle-ci.

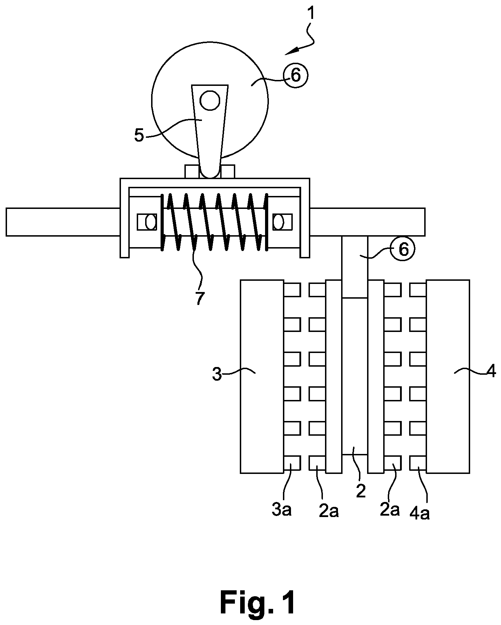

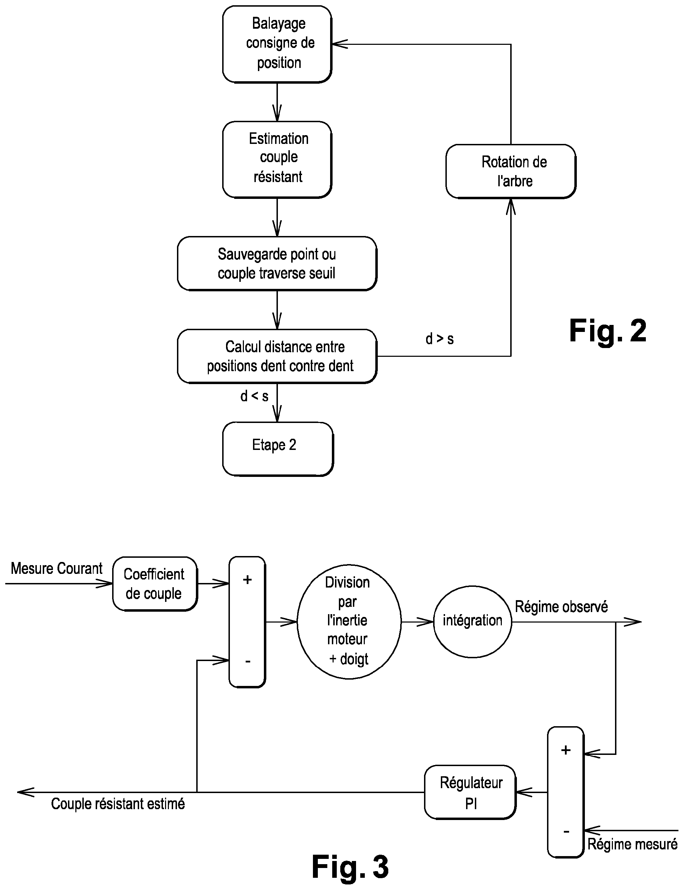

Le procédé objet de l'invention, est illustré par les figures 2 à 7. Il permet l'apprentissage de la position neutre d'un actionneur de passage de vitesses 1 à baladeur motorisé 2, tel que celui de la figure 1, entre deux pignons d'engagement opposés 3, 4. L'actionneur 1 comporte un élément de commande 5, tel qu'un doigt d'actionnement, ou un autre système. L'élément de commande 5 est régulé en position par son moteur d'entraînement 6. Il agit sur un ensemble mécanique de déplacement du baladeur comprenant un système d'assistance à ressort 7, apte à accumuler de l'énergie lorsque les dents du baladeur 2a viennent en butée contre celles d'un pignon 3a, 4a pour passer une vitesse. Le ressort 7 restitue cette énergie par détente dans un deuxième temps, pour assister l'engagement des dents du baladeur entre celles de ce pignon.

Le procédé de l'invention comprend essentiellement deux étapes :
- une première étape, dite de « balayage de position » avec enregistrement de l'effort résistant ; la distance entre les positions de blocage de dents, dites de butée, est calculée en détectant les positions de l'élément de commande lorsque la valeur du couple résistant estimé sur celui-ci franchit un seuil traduisant la mise en butée du baladeur ;
- une deuxième étape d'ajustement autour des positions de butée identifiées, afin d'obtenir la précision requise sur ces positions.

A l'issue de la seconde étape, on dispose des deux positions de mise en butée des dents du baladeur contre celles des pignons, avec suffisamment de précision pour en déduire la position du neutre mécanique, entre celles-ci.

La première étape est résumée sur la figure 2. Elle consiste à balayer au moins une fois les positions de l'élément de commande en estimant son effort résistant le long de sa course, à définir un seuil d'effort, et à sauvegarder sur la course de l'élément de commande les positions où ce seuil est franchi. Dans un premier temps, on fait ainsi parcourir à l'élément de commande l'ensemble de la course qui lui est permise. Les valeurs du couple résistant sur l'élément de commande sont enregistrées régulièrement, par exemple tous les 0,2 mm. Pour cela, on peut piloter l'élément de commande 5 par une consigne de vitesse ou par une consigne de position en rampe, c'est-à-dire qui balaye l'ensemble des positions atteignables de façon linéaire.

L'estimation du couple résistant sur l'élément de commande s'effectue de préférence par une méthode dite « d'observation », conforme à la figure 3. Elle repose sur l'observation du régime du moteur d'entraînement à partir d'une mesure de son courant, et sur la mesure de ce régime. Le couple résistant est estimé dans un régulateur, à partir de la différence entre le régime observé et le régime mesuré du moteur d'actionnement 6. Le régime observé est obtenu par intégration d'un terme représentant la différence entre un couple théorique issu de la mesure du courant affectée d'un coefficient de couple, et de la valeur du couple estimé.

L'avantage de la méthode d'observation, sur les calculs directs de couple, est sa grande robustesse aux bruits de mesure, et une dynamique importante. Elle ne comprend aucun calcul de dérivée (qui ont pour inconvénient d'amplifier les bruits) mais uniquement des calculs d'intégration, qui filtrent les bruits. Le régulateur PI (Proportionnel Intégral) permet de faire converger le régime observé vers le régime mesuré, et son paramétrage permet de favoriser la dynamique de l'estimation, ou sa précision. La précision est recherchée pour pouvoir discriminer de très faibles écarts sur le couple résistant de l'élément de commande.

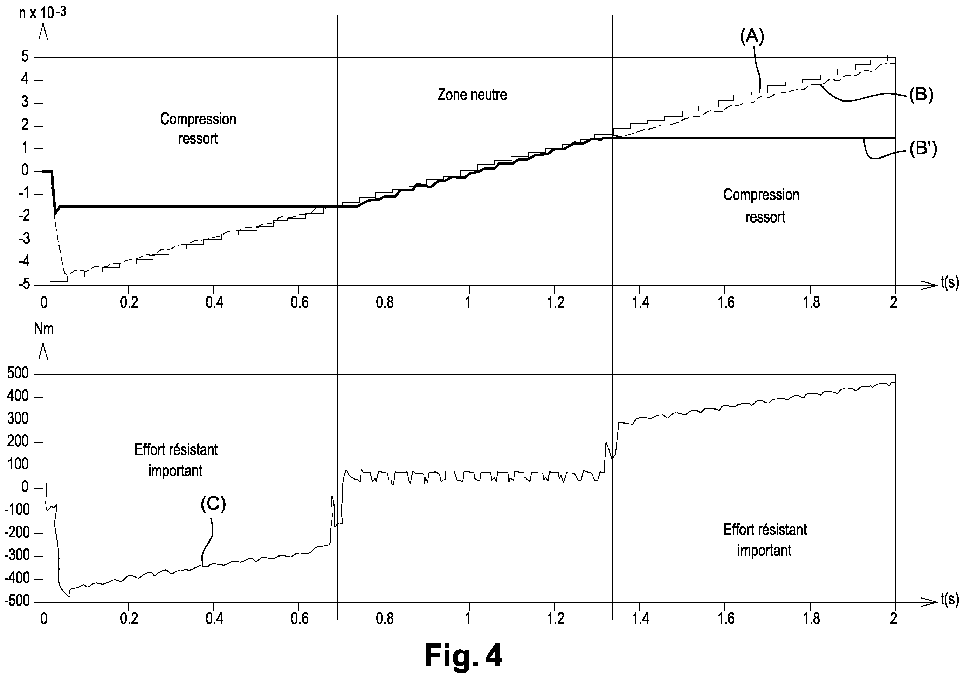

Dans 90% des cas, les dents du baladeur viennent en butée contre celles du pignon. Les graphes de la figure 4, illustrent cette situation. La courbe (A) reproduit la consigne de position du doigt, et la courbe (B) la position mesurée du doigt. Pour mettre en évidence le blocage dent contre dent, on a rapporté à titre indicatif en (B') la position de la fourchette actionnée par le baladeur, quoique cette position ne soit normalement pas détectable sur l'actionneur. Enfin sur la courbe (C), on voit la valeur du couple résistant estimé. Dans cet exemple, on a enregistré les efforts tous les 0,2mm. La compression du ressort commence juste avant la position -1.8mm d'un côté et 1.6mm de l'autre. L'espace neutre est d'environ 3.4mm. La précision n'est pas suffisante, mais la deuxième étape de calcul a pour but de l'affiner.

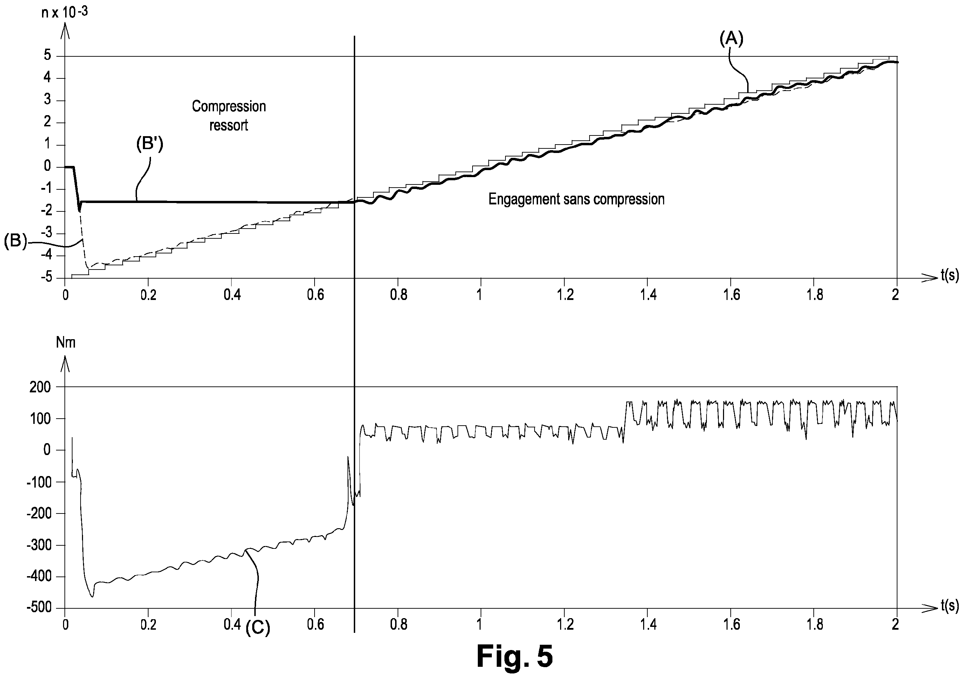

La figure 5 se rapporte aux essais de balayage (environ 10% des cas), où l'alignement des dents est bon. Les clabots 2a du baladeur s'engagent directement entre ceux d'un pignon. Le couple résistant n'augmente pas sur l'ensemble du parcours. Comme le blocage des dents intervient dans 90% des cas, il est inutile de chercher à réguler l'angle de l'arbre pour éviter les mises en butée des dents. Sa mise en rotation permet de faire une nouvelle tentative en réitérant la première étape si les dents du baladeur 2a s'engagent directement entre celles d'un pignon 3a, 4a en fin de course. Ces tentatives sont rapidement couronnées de succès. En effet, après cinq balayages, les dents 2a du baladeur n'ont pas buté contre celles du pignon, dans seulement 0,001% des cas.

Lors du balayage des positions, le couple résistant sur l'élément de commande est enregistré en valeur absolue. On définit un seuil d'effort au-delà duquel on est certain que le doigt n'est plus entièrement libre, c'est-à-dire que l'on comprime le ressort d'assistance. Il est par exemple de l'ordre de 200Nm. On calcule la distance (d) entre les deux positions où le couple résistant reste inférieur au seuil, et on la compare à leur écart réel (e). Si elle est supérieure à l'écart (d > e), les dents du baladeur n'ont pas buté contre celles du pignon. On fait tourner l'arbre de boîte concerné, en envoyant par exemple une requête de couple à un moteur d'entraînement du véhicule pour faire tourner le baladeur. Le balayage est renouvelé jusqu'à ce que d < e. A l'issue de la première étape, on dispose d'une première estimation des positions de butée.

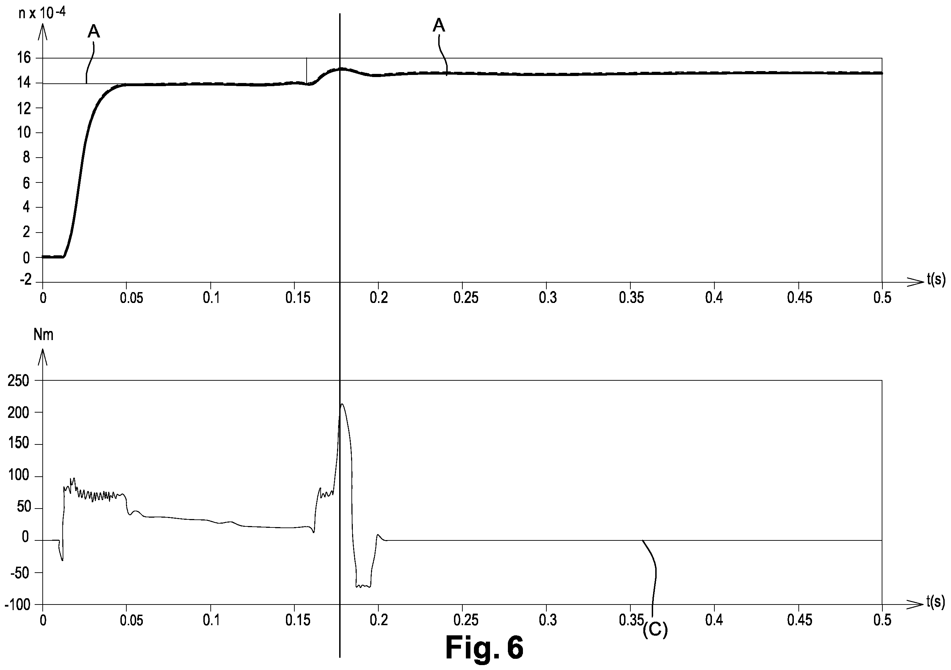

On peut passer à la deuxième étape qui assure une mesure plus fine des positions de butée du baladeur. Elle consiste à placer l'élément de commande dans une position de butée identifiée à l'étape un, puis à le libérer en coupant le moteur d'actionnement pour s'assurer qu'il conserve cette position. Pour cela, on amène l'élément de commande dans la position de blocage des dents déjà calculée. Puis on relâche l'élément de commande, en coupant le moteur d'actionnement. Le ressort repousse le doigt, ou non, selon qu'il est comprimé ou pas. Si la position de blocage est connue de la première étape à 0,2mm près, l'élément de commande reste au niveau de blocage après coupure du moteur, avec une précision de l'ordre de 0,03mm par rapport à position réelle de butée. C'est le cas sur la figure 6.

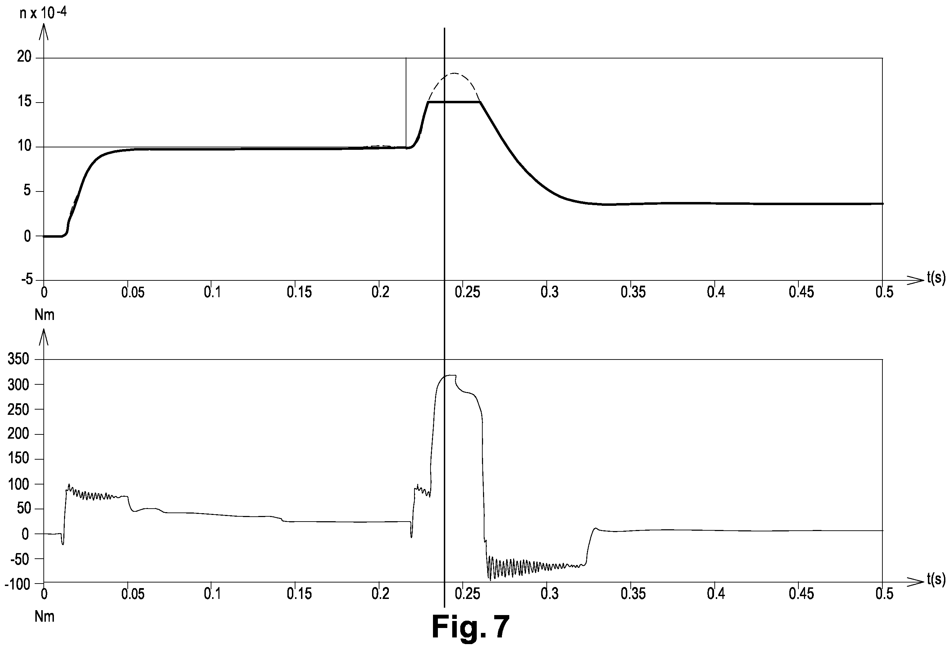

Si en revanche la position sur laquelle on place l'élément de commande est trop éloignée (d'au moins 0,2mm) de la position de réelle de butée, on a le résultat de la figure 7. C'est notamment le cas si la première étape n'a pas été effectuée. Lors de la coupure du moteur, le ressort, est fortement comprimé car la position de butée réelle est dépassée. L'effort résistant sur l'élément de commande (courbe C) s'élève brusquement. Il est indispensable de connaître la position de butée avec une précision suffisante. En effet, si on comprime trop le ressort, il fait revenir le doigt, qui ne reste pas dans la position de butée. A l'inverse, si la position imposée par le moteur est avant la position réelle de butée, et que la compression du ressort n'est pas entamée, l'élément de commande peut encore être soumis à d'autres sollicitations. C'est le cas notamment dans des zones de billage, pouvant faire bouger l'élément de commande, et perdre sa position.

En conclusion, l'invention ne nécessite l'implantation d'aucun dispositif particulier, puisqu'elle utilise des informations déjà disponibles au niveau de l'actionneur. En fonction du niveau de précision requis, on peut se contenter de la première étape, mais la seconde étape apporte une précision plus fine, ainsi qu'une vérification du bon fonctionnement de la première étape.

La méthode impose une nouvelle détermination des positions de butée, si celle-ci échappe à des premiers balayages de la course de l'élément de commande. La mise en butée du baladeur sur le pignon est facilement identifiable au niveau de la position fourchette, mais beaucoup moins au niveau de l'actionneur. Si le crabotage est direct, sans mise en butée des dents, les jeux de montage font que la position du neutre ne peut pas être connue de manière assez précise. En effet, lorsque la fourchette bloque en dent contre dent, l'actionneur est encore libre de se déplacer en comprimant le ressort d'assistance, de sorte que, le blocage dent contre dent est pratiquement invisible sur le déplacement de l'actionneur. Comme cet apprentissage doit être fait par le module d'actionneur, celui-ci ne dispose pas des mesures de position de la fourchette. L'invention procure un moyen particulièrement fiable et efficace d'identifier la position dent contre dent, de manière suffisamment précise pour pouvoir s'assurer de la position du « neutre mécanique » de la boîte.

## Revendications

1. Procédé d'apprentissage de la position neutre d'un actionneur de passage de vitesses (1) à baladeur motorisé (2) entre deux pignons d'engagement opposés (3, 4), comportant un élément de commande (5) régulé en position par son moteur d'entraînement, qui agit sur un ensemble mécanique de déplacement du baladeur muni d'un système d'assistance à ressort (7) apte à accumuler dans un premier temps de l'énergie lorsque les dents du baladeur viennent en butée contre celles du pignon à craboter pour passer la vitesse et à restituer cette énergie par détente dans un deuxième temps pour assister l'engagement des dents du baladeur entre celles de ce pignon, **caractérisé en ce que** la position neutre de l'actionneur (1) est déterminée par estimation du couple résistant sur celui-ci, au cours du déplacement du baladeur (2) vers les pignons (3, 4), en balayant les positions de l'élément de commande (5) et en détectant les positions de l'élément de commande (5) lorsque la valeur du couple résistant estimé sur celui-ci franchit un seuil traduisant la mise en butée des dents du baladeur (2a) contre celles de chacun des deux pignons (3a,4a), ce procédé étant **caractérisé en ce qu'**il comporte une étape de calcul de la distance entre les positions de butée, qui est réitérée si les dents du baladeur (2a) s'engagent directement entre celles d'un pignon (3a, 4a) en fin de course.

2. Procédé d'apprentissage selon la revendication 1, **caractérisé en ce qu'**il comporte une deuxième étape de mesure des positions de butée du baladeur (2), consistant à placer l'élément de commande (5) dans une position de butée identifiée puis à le libérer en coupant son moteur d'actionnement (6) pour s'assurer qu'il conserve cette position.

3. Procédé d'apprentissage selon la revendication 1 ou 2, **caractérisé en ce que** l'estimation du couple résistant sur l'élément de commande (5), repose sur l'observation du régime du moteur d'entraînement (6) à partir d'une mesure de son courant, et sur la mesure de ce régime.

4. Procédé d'apprentissage selon la revendication 3, **caractérisé en ce que** le couple résistant est estimé dans un régulateur, à partir de la différence entre le régime observé et le régime mesuré.

5. Procédé d'apprentissage selon la revendication 4, **caractérisé en ce que** le régime observé est obtenu par intégration d'un terme représentant la différence entre un couple théorique issu de la mesure du courant affectée d'un coefficient de couple, et de la valeur du couple estimé.

6. Procédé d'apprentissage selon la revendication 1 à 5, **caractérisé en ce que** les valeurs du couple résistant sur l'élément de commande (5), sont enregistrées régulièrement sur l'ensemble de sa course.

7. Procédé d'apprentissage selon la revendication 6, **caractérisé en ce que** l'élément de commande (5) est piloté par une consigne de vitesse.

8. Procédé d'apprentissage selon la revendication 6, **caractérisé en ce que** l'élément de commande est piloté par une consigne de position en rampe.

## Patentansprüche

1. Verfahren zum Lernen der neutralen Position eines Gangwechselaktuators (1) mit motorisch angetriebenem Schieberad (2) zwischen zwei einander gegenüberliegenden Eingriffsritzeln (3, 4), der ein Steuerelement (5) aufweist, dessen Position durch seinen Antriebsmotor geregelt wird und das auf eine mechanische Baugruppe zur Verschiebung des Schieberades einwirkt, die mit einem Federunterstützungssystem (7) versehen ist, das in der Lage ist, in einem ersten Zeitabschnitt, wenn die Zähne des Schieberades an denjenigen des formschlüssig zu erfassenden Ritzels zum Wechseln des Ganges zur Anlage kommen, Energie zu speichern und diese Energie durch Entspannung in einem zweiten Zeitabschnitt freizusetzen, um den Eingriff der Zähne des Schieberades zwischen diejenigen dieses Ritzels zu unterstützen, **dadurch gekennzeichnet, dass** die neutrale Position des Aktuators (1) durch Schätzung des Widerstandsmoments an diesem während der Verschiebung des Schieberades (2) zu den Ritzeln (3, 4) hin bestimmt wird, indem die Positionen des Steuerelements (5) abgetastet werden und indem die Positionen des Steuerelements (5) detektiert werden, wenn der Wert des geschätzten Widerstandsmoments an diesem einen Schwellenwert überschreitet, der das Inanschlagbringen der Zähne des Schieberades (2a) an denjenigen jedes der zwei Ritzel (3a, 4a) ausdrückt, wobei dieses Verfahren **dadurch gekennzeichnet ist, dass** es einen Schritt der Berechnung des Abstands zwischen den Anschlagpositionen aufweist, welcher wiederholt wird, falls die Zähne des Schieberades (2a) direkt zwischen diejenigen eines Ritzels (3a, 4a) in der Endlage eingreifen.

2. Verfahren zum Lernen nach Anspruch 1, **dadurch gekennzeichnet, dass** es einen zweiten Schritt der Messung der Anschlagpositionen des Schieberades (2) aufweist, der darin besteht, das Steuerelement (5) in eine identifizierte Anschlagposition zu bringen und es anschließend durch Ausschalten seines Betätigungsmotors (6) freizugeben, um sich zu vergewissern, dass es diese Position beibehält.

3. Verfahren zum Lernen nach Anspruch 1 oder 2, **dadurch gekennzeichnet, dass** die Schätzung des Widerstandsmoments am Steuerelement (5) auf der Beobachtung der Drehzahl des Antriebsmotors (6) anhand einer Messung seines Stroms und auf der Messung dieser Drehzahl beruht.

4. Verfahren zum Lernen nach Anspruch 3, **dadurch gekennzeichnet, dass** das Widerstandsmoment in einem Regler anhand der Differenz zwischen der beobachteten Drehzahl und der gemessenen Drehzahl geschätzt wird.

5. Verfahren zum Lernen nach Anspruch 4, **dadurch gekennzeichnet, dass** die beobachtete Drehzahl durch Integration eines Terms erhalten wird, welcher die Differenz zwischen einem theoretischen Drehmoment, das aus der mit einem Drehmomentkoeffizienten behafteten Messung des Stroms erhalten wird, und dem Wert des geschätzten Drehmoments repräsentiert.

6. Verfahren zum Lernen nach Anspruch 1 bis 5, **dadurch gekennzeichnet, dass** die Werte des Widerstandsmoments am Steuerelement (5) regelmäßig auf seinem gesamten Weg aufgezeichnet werden.

7. Verfahren zum Lernen nach Anspruch 6, **dadurch gekennzeichnet, dass** das Steuerelement (5) durch eine Sollgeschwindigkeit gesteuert wird.

8. Verfahren zum Lernen nach Anspruch 6, **dadurch gekennzeichnet, dass** das Steuerelement durch eine Sollposition mit rampenförmigem Verlauf gesteuert wird.

## Claims

1. Method for learning the neutral position of a gear shift actuator (1) having a motorized sliding gear (2) between two opposite engaging pinions (3, 4), including a command element (5) that is position-controlled by the drive motor thereof, which acts on a mechanical assembly for moving the sliding gear provided with an assistance system having a spring (7) which can firstly accumulate energy when the teeth of the sliding gear come into abutment against those of the pinion to be dog-coupled in order to shift gear and secondly restore this energy by expansion in order to assist the engagement of the teeth of the sliding gear between those of this pinion, **characterized in that** the neutral position of the actuator (1) is determined by estimating the resisting torque thereon, during the movement of the sliding gear (2) towards the pinions (3, 4), by scanning the positions of the command element (5) and by detecting the positions of the command element (5) when the value of the resisting torque estimated thereon crosses a threshold indicating the abutment of the teeth of the sliding gear (2a) against those of each of the two pinions (3a, 4a), this method being **characterized in that** it includes a step of calculating the distance between the abutment positions, which step is repeated if the teeth of the sliding gear (2a) engage directly between those of a pinion (3a, 4a) at the end of travel.

2. Learning method according to Claim 1, **characterized in that** it includes a second step of measuring the abutment positions of the sliding gear (2), consisting in placing the command element (5) in an identified abutment position, then releasing it by cutting off the actuating motor (6) thereof to ensure that it retains this position.

3. Learning method according to Claim 1 or 2, **characterized in that** the estimation of the resisting torque on the command element (5) is based on the observation of the speed of the drive motor (6) using a measurement of the current thereof, and on the measurement of this speed.

4. Learning method according to Claim 3, **characterized in that** the resisting torque is estimated in a controller, using the difference between the observed speed and the measured speed.

5. Learning method according to Claim 4, **characterized in that** the observed speed is obtained by integrating a term representing the difference between a theoretical torque resulting from the current measurement modified by a torque coefficient, and from the value of the estimated torque.

6. Learning method according to Claim 1 to 5, **characterized in that** the values of the resisting torque on the command element (5) are regularly recorded over the entirety of the travel thereof.

7. Learning method according to Claim 6, **characterized in that** the command element (5) is driven by a speed set point.

8. Learning method according to Claim 6, **characterized in that** the command element is driven by a ramp position set point.
